# EUROPEAN PATENT APPLICATION

(11) **EP 0 870 594 A1**
(43) Date of publication of application: **14.10.1998**
(21) Application number: 98302892.9
(22) Date of filing: 09.04.1998
(51) Int. Cl.: B29C 49/66

(54) **Cooling method for use in stretch blow molding**

(30) Priority: 11.04.1997 US 43843 P
(71) Applicant: THE BOC GROUP, INC., Murray Hill, New Providence, New Jersey 07974-2082 (US)
(72) Inventor: Lee, Ron Clark, Bloomsbury, New Jersey, 08804 (US)
(74) Representative: Wickham, Michael

(57) **Abstract**

A method of cooling article 18, particularly of a biaxially orientated plastics material such as PET, formed in a stretch blow molding apparatus. In accordance with the method a cryogenic liquid refrigerant is mixed with a gas or vapor in a mixer 38 to produce a cooling fluid. The cooling fluid is introduced through apertures 24 in a stretch rod 22 into the article 18 as a two phase fluid. The vapour flow rate is controlled by valve 40 and therefore the specific cooling potential of the cooling fluid is regulated so that the article is heat set in an accurate and controlled manner that is reproducible.

## Description

The present invention provides a method of cooling an article within a heated mold of a stretch blow molding apparatus.

There are a variety of blow molding processes in which thermoplastic articles are formed by blowing, that is applying internal gaseous pressure to a parison or a preform to cause the article to assume the shape of a mold. In stretch blow molding, the preform is stretched prior to being blown. Special problems exist in stretch blow molding bi-axially oriented materials such as polyethylene terephthalate, known in the art as "PET". Typically, the preform is heated to somewhat above the glass transition temperature, which in the case of PET would is 80° C. The warm preform is then stretched axially and then is blown rapidly with air, typically with two sequential air pressures to conform to a heated mold. The first of the two air pressures is generally in a range of between about 100 psig and about 200 psig and the second of the two air pressure is in a range of between about 300 psig and about 600 psig.

The resulting formed article does not have two dimensional stability when heated and thus, it is incapable of being filled with a warm fluid having a temperature of between about 85° C. and about 95° C. In order to allow finished articles such as containers to be filled with a hot fill material, the resultant blown article must be heat-set. In a two mold process, this is accomplished by cooling the newly formed article, formed within a first mold, to room temperature. The article is then re-warmed in a hot second mold maintained at a temperature in a range of between about 10° C. and about 50° C. above the glass transition temperature of the thermoplastic while simultaneously re-pressurizing the formed article. In a single mold process the article is heat and cooled within a single hot mold.

For the single mold process, the simultaneous heating from a hot mold and cooling from an internal coolant has been difficult to control with any degree of consistency.

Moreover the amount of cooling that can be introduced is limited which in turn limits the hot fill capability of the formed article. A variety of cryogenic processes have been proposed that overcome the cooling limitation. For instance, WO-A-96/30190, liquid nitrogen is introduced into the mold at a temperature of below -50° C to purge and cool the molded preform. Other prior art processes have attempted to use liquid nitrogen to effect such cooling introduced through the stretch rod, for instance, U.S.-A-5,085,822. The problem with such cryogenic cooling methods is that they are difficult to control and also suffer from a lack of reproducibility.

As will be discussed, the present invention provides a method of cooling an article within a heated mold of a stretch blow molding apparatus that can be easily controlled and that is able to be reproduced.

According to the present invention there is provided a method of cooling an article within a heated mold of a single mold stretch blow molding apparatus, said method comprising:
mixing a cryogenic liquid refrigerant with a gas or vapor to produce a cooling fluid;
introducing said cooling fluid into said article;
said refrigerant and gas or vapor being mixed such that said cooling fluid assumes a two phase flow no later that upon its introduction into said article; and
controlling the flow rate of said gas or vapor and therefore the specific cooling potential of said cooling fluid.

As used here and in the claims, the term "cooling potential", means the degree to which heat will be transferred from the article to the cryogenic refrigerant. The use of the two-phase mixture allows for better distribution of the cryogenic coolant within the mold and the control of the vapor flow rate directly controls the degree to which the resultant coolant will cool the article. In such manner, the vapor flow rate can be independently manipulated so that an acceptable finished product is produced with acceptable hold fill capability.

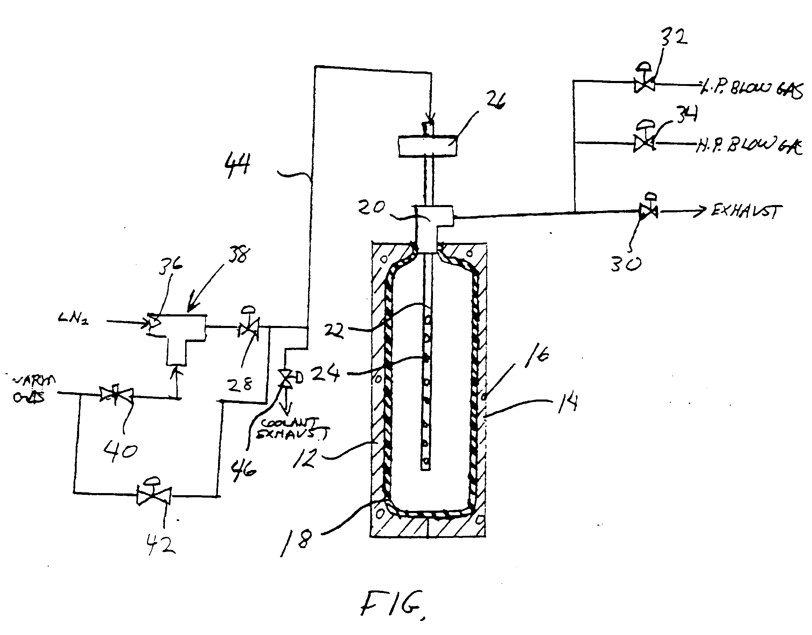

The method according to the invention will now be described by way of example with reference to the accompanying drawing which is a schematic representation of an apparatus used in carrying out a method in accordance with the present invention.

With reference to the drawing an apparatus 1 in accordance with the present invention is illustrated. Apparatus 1 is a stretch blow molding apparatus which includes a mold 10 having two mold halves 12 and 14 that are provided with passages 16 for oil to heat the mold. The mold is illustrated as containing article 18. The article may be a bottle or other hollow vessel of biaxially oriented PET.

As can be appreciated by those skilled in the art, although two mold halves 12 and 14 are illustrated, in many potential applications of the present invention, the mold might be provided with more than two separable sections, three sections being common. Additionally, mold .10 can be heated by means other than oil, for instance, embedded electric heaters. Furthermore, different sections of the mold may be heated to different temperatures.

Stretch blow molding apparatus 1 operates in a known manner in which the heated preform, used in forming article 18 is held in position and is placed within mold 10 with mold halves 12 and 14 in an open position. Mold halves 12 and 14 are heated with oil circulating through passages 16. Element 20 is placed within the preform and a reciprocating stretch rod 22 having apertures 24 (passing through element 20) is used for entry of the cooling fluid into the preform and article 18 as will be discussed hereinafter. As would be known to those skilled in the art, element 29 would be provided with an annular passage for introduction of the blowing air and the passage of the subsequent exhaust.

An actuator 26 is used in reciprocating stretch rod 22 to stretch the preform, after mold halves 12 and 14, come together. Thereafter, with control valves 28 and 30 in a closed position, a control valve 32 is opened to emit a low pressure blowing gas into the preform. Thereafter, control valve 32 closes and control valves 30 and 34 open to emit a high pressure blowing gas to finish the blowing stage. As would be known to those in the art, there might be some degree of overlap provided for in the operation of the foregoing mentioned control valves 28, 30, 32 and 34 to account for system dynamics. After cooling in accordance with the invention, mold halves 12 and 14 separate to permit further process of article 18.

In order to cool article 18, the cryogenic liquid refrigerant such as liquefied nitrogen (or other liquefied gas normally a vapor at standard temperature and pressure) is introduced into a spray nozzle 36 set within a mixing tee 38. Spray nozzle 36 drops static pressure of the liquid to draw in a vapor flow into the liquid and to produce a two-phase flow. With control valves 28 and 30 open and control valves 32 and 34 closed, the resultant two-phase flow is introduced into stretch rod 22 and flows out of openings 24 into the molded article. The vapor flow can be air, gaseous nitrogen or other warm gas (for example at ambient temperature) compatible with the thermoplastic used. The flow rate of the vapor is adjusted by a needle valve 40 so that the amount, rate, and distribution of cooling is optimum for forming molded article 18 prior to separation of mold halves 12 and 14 of mold 10. The flow rate of cryogenic liquid is influenced by selection of spray nozzle 36.

Although a mixing system using a spray nozzle 36 is illustrated, as could be appreciated, the present invention could be practiced by a variety of alternative mixing methods such as a simple tee and a downstream static mixer. Moreover, the cryogenic liquid refrigerant could be liquid air or a synthesized mixture of oxygen and nitrogen. Typically in the practice of the present invention, the cryogenic liquid refrigerant is in a subcooled state prior to its mixing with the vapor and as such, a portion of the vapor will condense. Moreover, the cryogenic cooling fluid produced by the mixing could be in a saturated or slightly subcooled state so that the two-phase flow rather than being formed within mixing tee 38 is formed upon expansion of the mixture from openings 24 of stretch rod 22. Further control of the process can be provided by utilizing a proportional valve as control valve 30. In such manner, the total flow rate of cooling fluid can be controlled through molded article 18.

Preferably, a piping leg can be provided with a purge valve 42 that is normally closed but opens at the conclusion of the cooling cycle (closure of valve 28) in order to drive any remaining coolant in a delivery line 44 into the article 18. A coolant exhaust valve 46, which also is normally closed, opens at the conclusion of the cycle (after closure of valve 42) to relieve all pressure from delivery line 44 and stretch rod 22. This prevent coolant from being expelled from stretch rod 22 after it is withdrawn.

## Claims

1. A method of cooling an article within a heated mold of a single mold stretch blow molding apparatus, said method comprising:
mixing a cryogenic liquid refrigerant with a gas or vapor to produce a cooling fluid;
introducing said cooling fluid into said article;
said refrigerant and gas or vapor being mixed such that said cooling fluid assumes a two phase flow no later that upon its introduction into said article; and
controlling the flow rate of said gas or vapor and therefore the specific cooling potential of said cooling fluid.

2. A method according to claim 1, wherein said cryogenic refrigerant is formed into a jet of reduced pressure to draw said vapor into said mixture.

3. A method according to claim 1 or claim 2, wherein said two phase flow is formed upon said mixing.

4. A method of according to any one of the preceding claims, wherein said refrigerant is a mixture comprising oxygen and nitrogen or a liquefied atmospheric gas.

5. A method according to any one of the preceding claims, wherein said refrigerant is in a subcooled state prior to its mixing with said gas or vapor.

6. A method according to any one of the preceding claims, wherein said gas or vapor is air.

7. A method according to any one of claims 1 to 5, wherein said gas or vapor is nitrogen gas.

8. A method of according to any one of the preceding claims, further comprising controlling the flow rate of said cooling fluid.

9. A method according to any one of the preceding claims wherein said two phase flow is formed upon said mixing.
